# EUROPÄISCHE PATENTANMELDUNG

(11) **EP 2 541 414 A1**
(43) Veröffentlichungstag der Anmeldung: **02.01.2013**
(21) Anmeldenummer: 11171638.7
(22) Anmeldetag: 28.06.2011
(51) Int. Cl.: G06F 11/10, H04L 1/00

(54) **Verfahren zur Übertragung von Daten an eine Antriebseinheit, Computerprogramm zur Implementierung des Verfahrens und Antriebseinheit mit einem solchen Computerprogramm**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft ein Verfahren zur Übertragung von mindestens einem Datum (26,28,30) in oder zu einer Antriebseinheit (10), wobei das oder jedes Datum (26,28,30) und dessen bzw. deren Nutzdatenbits zumindest in einen besonders relevanten, ersten Teil (36,38,40) und einen im Vergleich dazu weniger relevanten, zweiten Teil (42,44,46) aufgeteilt wird bzw. werden, wobei der erste und zweite Teil (36,38,40;42, 44,46) jeweils mit einem fehlerkorrigierenden Code durch Hinzufügung von Prüfbits (34) gesichert wird und wobei für den ersten Teil (36,38,40) ein Verhältnis einer Anzahl der Nutzdatenbits zu einer Anzahl der Prüfbits (34) größer als ein Verhältnis der Anzahl der Nutzdatenbits zu der Anzahl der Prüfbits (34) für den zweiten Teil (42,44,46) ist.

## Beschreibung

Die Erfindung betrifft ein Verfahren zur Übertragung von Daten an eine Antriebseinheit, nämlich zur Übertragung von mindestens einem Datum an die Antriebseinheit, zum Beispiel einen Frequenzumrichter, sowie eine nach dem Verfahren arbeitende Antriebseinheit und ein Computerprogramm zur Implementierung des Verfahrens.

Speziell bei Frequenzumrichtern müssen Daten von einer Recheneinheit oder Steuerungsvorrichtung zu einem Leistungsteil übertragen werden. Dabei ist es wichtig, dass diese Daten ausreichend schnell und häufig sowie fehlerfrei übertragen werden. Wenn das Leistungsteil fehlerhafte Daten erhält und verarbeitet, kann dies zu einem Funktionsausfall oder sogar einem Defekt des Frequenzumrichters führen.

Zur Absicherung der Datenübertragung an eine Antriebseinheit sind bisher im Wesentlichen zwei Ansätze bekannt geworden. Zum Einen ist es möglich, die jeweils zu übertragenden Daten in einem Telegramm mit einer Prüfsumme zu versehen, die vom Empfänger ebenfalls berechnet wird, so dass eine empfangene Prüfsumme mit einer anhand der aktuell empfangenen Daten ermittelten Prüfsumme auf Seiten des Empfängers verglichen werden kann. Bei Abweichungen hinsichtlich der beiden Prüfsummen, also der auf Senderseite gebildeten und zusammen mit dem Telegramm übermittelten Prüfsumme einerseits und der auf Empfängerseite gebildeten andererseits ist ein Fehler in der Übertragung erkannt. Eine Möglichkeit zur Behandlung einer solchen Datenübertragung, also zur Behandlung eines im Rahmen der Datenübertragung empfangenen und fehlerhaften Telegramms, besteht darin, dass das Telegramm verworfen wird. Dieser Ansatz hat allerdings den Nachteil, dass beim Erhalt eines als fehlerhaft erkannten Telegramms die Datenübertragung wiederholt und ein neues Telegramm gesendet werden muss. In vielen Anwendungsbereichen steht die dafür erforderliche Zeit jedoch nicht zur Verfügung, so dass ein Telegrammausfall akzeptiert wird und anstelle der Werte des fehlerhaften Telegramms Werte des letzten Telegramms verwendet werden müssen. Dies reduziert allerdings die Leistung der Antriebseinheit, speziell die Genauigkeit, mit der die Antriebseinheit auf sich ändernde Vorgaben reagiert.

Bei einem alternativen Ansatz zur Datenübertragung werden Telegramme so codiert, dass fehlerhafte Bits in den von den Telegrammen umfassten Nutzdaten erkannt und ggf. korrigiert werden können. Ein in dieser Hinsicht verwendbarer Algorithmus ist der sogenannte Reed-Solomon-Algorithmus. Ähnlich wie bei dem um eine Prüfsumme ergänzten Telegramm wird auch bei diesem Ansatz den eigentlichen Nutzdaten eine bestimmte Anzahl von Bits als Prüfbits hinzugefügt, so dass sich die Länge des gesamten Telegramms erhöht. Die Anzahl der Prüfbits ist dabei mit der Anzahl der Nutzdatenbits korreliert und so bestimmt, dass fehlerhafte Bits in den Nutzdaten erkannt und ggf. korrigiert werden können. Abhängig von der Anzahl der Nutzdatenbits und der Anzahl der Prüfbits verbleibt jedoch eine gewisse Restwahrscheinlichkeit, dass ein Fehler in einem Nutzdatenbit nicht erkannt wird oder dass ein Nutzdatenbit falsch korrigiert wird. Mit dieser Wahrscheinlichkeit kommt es dann vor, dass falsche Daten akzeptiert werden und diese ggf. zu einem Funktionsausfall des Frequenzumrichters oder sogar zu einem Defekt des Frequenzumrichters führen.

Bei einer durch die Art und Anzahl der zu übertragenden Daten gegebenen Anzahl von Nutzdatenbits, die in einem Rechentakt des Frequenzumrichters übertragen werden können, kann durch eine Vergrößerung der Anzahl der Prüfbits diese Fehlerwahrscheinlichkeit reduziert werden. Damit sinkt aber die Anzahl der pro Zeiteinheit übertragbaren Nutzdatenbits. In realen Anwendungen muss also zwischen der Menge der Nutzdatenbits und der Restwahrscheinlichkeit für eine fehlerhafte Bitkorrektur ein Kompromiss eingegangen werden.

Eine Aufgabe der Erfindung besteht entsprechend darin, ein weiteres Verfahren zur Übertragung von Daten an eine Antriebseinheit anzugeben, insbesondere ein Verfahren, das die oben skizzierten Nachteile vermeidet oder deren Auswirkungen reduziert.

Diese Aufgabe wird erfindungsgemäß mit den Merkmalen des Anspruchs 1 gelöst. Dazu ist bei einem Verfahren zur Übertragung von mindestens einem Datum zu oder in einer Antriebseinheit vorgesehen, dass das oder jedes Datum oder die Gesamtheit der Daten zumindest in einen besonders relevanten, ersten Teil und einen im Vergleich dazu weniger relevanten, zweiten Teil aufgeteilt wird und dass der erste und zweite Teil jeweils mit einem fehlerkorrigierenden Code durch Hinzufügung von Prüfbits gesichert wird, wobei für den ersten Teil ein Verhältnis einer Anzahl der Nutzdatenbits zu einer Anzahl der Prüfbits größer als ein Verhältnis der Anzahl der Nutzdatenbits zu der Anzahl der Prüfbits für den zweiten Teil ist.

Der Vorteil der Erfindung besteht darin, dass von dem oder jedem Datum oder der Gesamtheit der Daten nur ein Teil der für dessen bzw. deren Codierung notwendigen Nutzdatenbits mit einer hohen Anzahl von Prüfbits gesichert wird, während ein anderer Teil mit einer geringeren Anzahl von Prüfbits gesichert wird. Damit wird ein besserer Kompromiss zwischen der Menge der Nutzdatenbits und der Restwahrscheinlichkeit für einen nicht erkannten Fehler oder eine fehlerhafte Bitkorrektur gefunden. Dies wird erreicht, indem entweder bei gleicher Restfehlerwahrscheinlichkeit mehr Nutzdatenbits übertragen werden können oder aber bei einer gleichen Nutzdatenbitanzahl die Wahrscheinlichkeit für einen Umrichterausfall aufgrund einer fehlerhaften Bitkorrektur oder einem nicht erkannten Bitfehler gesenkt wird.

Dieser Ansatz kommt sowohl bei der Übertragung von mindestens einem Datum oder genau einem Datum oder bei einer Übertragung einer Mehrzahl von Daten in Betracht. Bei einer Übertragung einer Mehrzahl von Daten wird zum Beispiel jedes Datum zumindest in einen ersten und einen zweiten Teil aufgeteilt, wobei alle ersten Teile und alle zweiten Teile zusammen jeweils mit einem fehlerkorrigierenden Code durch Hinzufügung von Prüfbits gesichert werden und wobei für die ersten Teile ein Verhältnis einer Anzahl der Nutzdatenbits zu einer Anzahl der Prüfbits größer als ein Verhältnis der Anzahl der Nutzdatenbits zu der Anzahl der Prüfbits für die zweiten Teile ist. Alternativ kann bei einer Übertragung einer Mehrzahl von Daten auch vorgesehen sein, dass der erste Teil aus bestimmten Daten der Gesamtheit der Daten und der zweite Teil aus den verbleibenden Daten gebildet wird.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass für den ersten Teil eines Datums - oder bei einer Mehrzahl von übertragenen Daten für die ersten Teile jedes Datums - eine vorgegebene oder vorgebbare Anzahl von dessen bzw. deren höherwertigen oder höchstwertigen Bits verwendet wird. Dies ist eine Möglichkeit, um der Tatsache Rechnung zu tragen, dass bei einer Datenübertragung an eine Antriebseinheit oder in einer Antriebseinheit, insbesondere einen Frequenzumrichter, nicht alle Bits in einem Telegramm gleich wichtig sind. Wird nämlich beispielsweise das höchstwertige Bit eines z.B. eine Amplitude oder einen Winkel einer Sollspannung codierenden Datums falsch übertragen, so weist der empfangene Wert einen Fehler von fünfzig Prozent auf. Dies führt am Ausgang des Frequenzumrichters zu einem hohen Fehlerstrom und somit zu einer Überstromabschaltung innerhalb des aktuellen Rechentakts. Sofern die Ursache für den fünfzigprozentigen Fehler nicht ohne Weiteres erkennbar ist, sei darauf verwiesen, dass bei der üblichen Binärcodierung digital übermittelter Daten der Dezimalwert eines Bits bei einem Übergang zu einer nächsthöheren Bitposition jeweils genau verdoppelt wird, entsprechend der Bildungsregel mit Potenzen zur Basis zwei.

Die jeweils verwendete vorgegebene oder vorgebbare Anzahl höherwertiger oder höchstwertiger Bits muss auf Seiten des jeweiligen Senders und Empfängers für die Bildung der ersten und zweiten Teile auf Basis der zugrunde liegenden Daten bzw. für die spätere Kombination zusammengehöriger erster und zweiter Teile zu einem zur Weiterverarbeitung verwendbaren Datum bekannt sein. Dafür kommt in Betracht, dass die jeweilige Anzahl auf Sender- und Empfängerseite fest hinterlegt und zum Beispiel Bestandteil einer Projektierung ist, auf die Sender und Empfänger zugreifen können, ist oder dass die jeweilige Anzahl in einem Telegrammkopf übermittelt wird. Gleiches gilt entsprechend für die jeweilige Anzahl der Prüfbits.

Zur Ermittlung des fehlerkorrigierenden Codes kommt z.B. das Reed-Solomon-Verfahren oder der Reed-Solomon-Algorithmus in Betracht. Dies ist ein bewährtes und vergleichsweise einfach zu implementierendes Verfahren zur Erkennung von Bitfehlern und mit der Möglichkeit zur eventuellen Bitfehlerkorrektur, so dass zumindest anhand der für den oder die ersten Teile vorgesehenen Prüfbits eine Erkennung und/oder Korrektur eventueller Bitfehler möglich wird, um damit z.B. ansonsten zu besorgende Fehlerströme oder dergleichen und einen daraus eventuell resultierenden Umrichterausfall zu vermeiden.

Das Verfahren kommt besonders in Betracht, wenn es darum geht, in einer Antriebseinheit zumindest ein Datum von einer Steuerungsvorrichtung eines Frequenzumrichters zu einem Leistungsteil des Frequenzumrichters zu übertragen. Die Steuerungsvorrichtung des Frequenzumrichters ermittelt in jeweils einem Rechentakt Sollwerte für den Frequenzumrichter und übermittelt diese an den Leistungsteil. Wenn es bei den als Nutzdaten in einem Telegramm an den Leistungsteil übertragenen Daten zu einem Bitfehler kommt, kann dies die bereits erwähnten Fehlerströme und einen daraus resultierenden Umrichterausfall hervorrufen. Indem einzelne, besonders relevante Teile eines Datums oder jedes Datums mit einer höheren relativen Anzahl von Prüfbits abgesichert wird, lassen sich ohne Verlängerung des Telegramms für die relativ relevanteren Nutzdatenbits mit einer höheren Wahrscheinlichkeit als dies bisher gegeben war, eventuelle Bitfehler aufdecken oder sogar korrigieren, so dass die ungünstigen Auswirkungen vermieden werden.

Die oben genannte Aufgabe wird auch mit einer Antriebseinheit mit einem oder für einen Elektromotor gelöst, die nach dem Verfahren wie hier und im Folgenden beschrieben arbeitet und dazu Mittel zur Durchführung des Verfahrens umfasst. Die Erfindung ist dabei bevorzugt in Software oder Firmware implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Antriebseinheit oder ein Antriebssystem, in deren bzw. dessen Speicher als Mittel zur Durchführung des Verfahrens und seiner Ausgestaltungen ein solches Computerprogramm geladen oder ladbar ist. Bei einem Frequenzumrichter als Antriebseinheit oder Bestandteil einer Antriebseinheit, wobei der Frequenzumrichter eine Steuerungsvorrichtung und diese wiederum eine Verarbeitungseinheit in Form oder nach Art eines Mikroprozessors oder dergleichen und einem Speicher umfasst, sind Verarbeitungseinheit und Speicher Beispiele für Mittel zur Durchführung des Verfahrens. Ein weiteres Mittel zur Durchführung des Verfahrens ist ein in den Speicher geladenes Computerprogramm der oben beschriebenen Art. Bei der besonders bei der Verwendung mit Frequenzumrichtern notwendigen hohen Geschwindigkeit der Datenübertragung und der dieser vorangehenden Vorverarbeitung der Daten sowie der sich anschließenden Bearbeitung der Daten kommt speziell auch eine Implementation des Verfahrens oder einzelner Aspekte des Verfahrens, etwa die Aufteilung eines Datums in einen ersten und einen zweiten Teil und/oder die Ermittlung zugehöriger Prüfbits, in Firmware, also zum Beispiel in Form eines ASCIs, in Betracht. Zur leichteren sprachlichen Darstellung soll auch eine Implementation in Firmware oder eine teilweise Implementation in Firmware und eine teilweise Implementation in Software von dem Begriff Computerprogramm umfasst sein.

Der Vorteil der Erfindung und ihrer Ausgestaltungen besteht damit insbesondere darin, dass ohne Verlängerung des Telegramms, also ohne dass in einer gleichen Zeiteinheit weniger Daten übertragen werden können, eine Restwahrscheinlichkeit für nicht erkannte Bitfehler in den Nutzdaten des Telegramms gesenkt wird. Wenn bisher ein Telegramm mit einem ersten, zweiten und dritten Datum mit jeweils acht Bits, insgesamt also vierundzwanzig Bits, übertragen wird, kommt deren Absicherung durch zum Beispiel zehn Prüfbits in Betracht. Abhängig von der Anzahl der Nutzdatenbits und der dazu gebildeten Prüfbits - genauer: abhängig vom Verhältnis der Prüfbits zu den Nutzdatenbits - verbleibt eine Restwahrscheinlichkeit, dass ein Nutzdatenbit falsch korrigiert wird oder dass ein Bitfehler nicht erkannt wird. Dabei wird allerdings jedem Nutzdatenbit die gleiche Bedeutung beigemessen. Indem gemäß dem hier vorgestellten Ansatz das oder jedes zu übertragende Datum oder die Gesamtheit der Daten in einen ersten und einen zweiten Teil aufgeteilt wird, erfolgt eine Aufteilung der Nutzdatenbits nach deren Relevanz, insbesondere nach deren Einfluss auf den jeweils kodierten numerischen Wert. Indem weiter einerseits der erste Teil oder alle ersten Teile und andererseits der zweite Teil oder alle zweiten Teile mit Prüfbits versehen werden und das Verhältnis der Prüfbits zu den Nutzdatenbits bei dem oder jedem ersten Teil größer als bei dem oder jedem zweiten Teil ist, ist für die relevanteren Nutzdatenbits ein evtl. Bitfehler mit einer vergleichsweise großen Wahrscheinlichkeit erkennbar oder korrigierbar, während für die weniger relevanten Nutzdatenbits eine insofern geringere Wahrscheinlichkeit in Kauf genommen wird. Wenn ausgehend von dem oben eingeführten Beispiel mit vierundzwanzig Nutzdatenbits von jedem Datum die beiden höchstwertigen Bits als jeweils erster Teil des Datums übernommen werden, ergeben sich für alle ersten Teile insgesamt sechs Bit und für alle zweiten Teile insgesamt achtzehn Bit. Wenn die ersten Teile mit drei Prüfbits abgesichert werden, ergibt sich eine Relation von drei Prüfbits zu sechs Nutzdatenbits. Bei einer solchen Relation von 50% ergibt sich eine vergleichsweise geringe Restfehlerwahrscheinlichkeit. Jedenfalls eine geringere Restfehlerwahrscheinlichkeit als dies bei einer Absicherung einer Bitfolge von vierundzwanzig Nutzdatenbits durch zum Beispiel zehn Prüfbits möglich wäre. Dass die Restfehlerwahrscheinlichkeit für die weniger relevanten sechzehn Nutzdatenbits, die zum Beispiel ebenfalls mit drei Prüfbits abgesichert werden, ungünstiger ist, kann wegen des geringeren Einflusses dortiger etwaiger Fehler auf den numerischen Wert des jeweiligen Datums in Kauf genommen werden. Das nach dem hier vorgestellten Ansatz gebildete Telegramm umfasst auf der Basis der oben exemplarisch eingeführten Zahlenwerte vierundzwanzig Nutzdatenbits (aufgeteilt in sechs Nutzdatenbits und achtzehn Nutzdatenbits) und sechs Prüfbits (aufgeteilt in jeweils drei Prüfbits), also insgesamt dreißig Bit. Das Telegramm ist also bei günstigerer Restfehlerwahrscheinlichkeit kürzer als ein nach dem Stand der Technik gebildetes Telegramm mit ebenfalls vierundzwanzig Nutzdatenbits und zum Beispiel zehn Prüfbits.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Antriebseinheit mit einem Frequenzumrichter für einen Elektromotor,
- FIG 2: als Bestandteile des Frequenzumrichters eine Steuerungsvorrichtung und einen Leistungsteil sowie eine zwischen diesen Einheiten bestehende kommunikative Verbindung und ein darüber über-mittelbares Telegramm,
- FIG 3: eine schematisch vereinfachte Darstellung von dem Telegramm umfassten Nutzdaten und deren Ab-sicherung durch eine Prüfsumme,
- FIG 4: die Nutzdaten und die Prüfsumme gemäß FIG 3 als Bitstrom,
- FIG 5: die Nutzdatenbits wie in FIG 4 und anstelle ei-ner Prüfsumme eine Anzahl von Prüfbits,
- FIG 6: eine Aufteilung der Nutzdatenbits in erste und zweite Teile und deren Absicherung unabhängig voneinander durch jeweils eine Anzahl von Prüf-bits sowie
- FIG 7 und 8: jeweils ein Flussdiagramm zur Verdeutlichung des Ablaufs des Verfahrens.

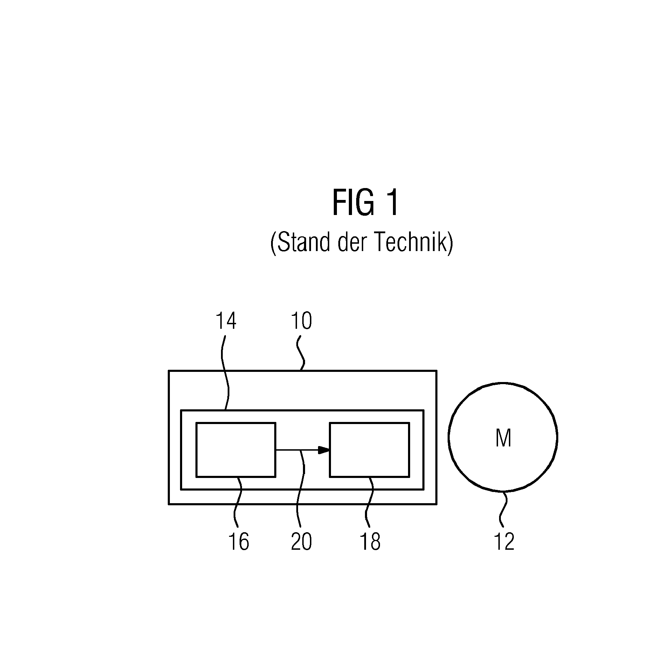

FIG 1 zeigt schematisch vereinfacht eine Antriebseinheit 10 für einen Elektromotor 12, etwa zur Verwendung bei einer Werkzeug- oder Produktionsmaschine. Die Antriebseinheit 10 umfasst in an sich bekannter Art und Weise einen Frequenzumrichter 14. Der Frequenzumrichter 14 ist für einen drehzahlgeregelten Antrieb des Elektromotors 12 vorgesehen, indem - wie ebenfalls an sich bekannt - durch diesen eine Amplitude und/oder ein Winkel einer Sollspannung für den Elektromotor 12 ermittelt und erzeugt wird. Dafür umfasst der Frequenzumrichter 14 eine Steuerungsvorrichtung 16 und einen Leistungsteil 18. Die Steuerungsvorrichtung 16 berechnet im Betrieb des Frequenzumrichters fortwährend - also in jeweils einem Rechentakt - z.B. eine Amplitude und/oder einen Winkel einer Sollspannung. Diese wird bzw. werden fortwährend an den Leistungsteil 18 übermittelt und zwar über eine zwischen der Steuerungsvorrichtung 16 und dem Leistungsteil 18 bestehende kommunikative Verbindung 20, z.B. eine serielle Verbindung.

Im Folgenden wird die Datenübertragung von der Steuerungsvorrichtung 16 an den Leistungsteil 18 mit weiteren Details erläutert. Dabei gilt es zu bedenken, dass der Umstand der Datenübertragung in einer Antriebseinheit 10, hier also die Datenübertragung zwischen der Steuerungsvorrichtung 16 und dem Leistungsteil 18 eines Frequenzumrichters 14, nur ein Beispiel zur Erläuterung der Erfindung ist und dass das Verfahren zur Übertragung von Daten zwischen der Steuerungsvorrichtung 16 und dem Leistungsteil 18 grundsätzlich für jede Art von Datenübertragung zwischen einerseits einem Sender und andererseits einem Empfänger in Betracht kommt. Steuerungsvorrichtung 16 und Leistungsteil 18 sind also nur Beispiele für grundsätzlich beliebige Sender bzw. Empfänger.

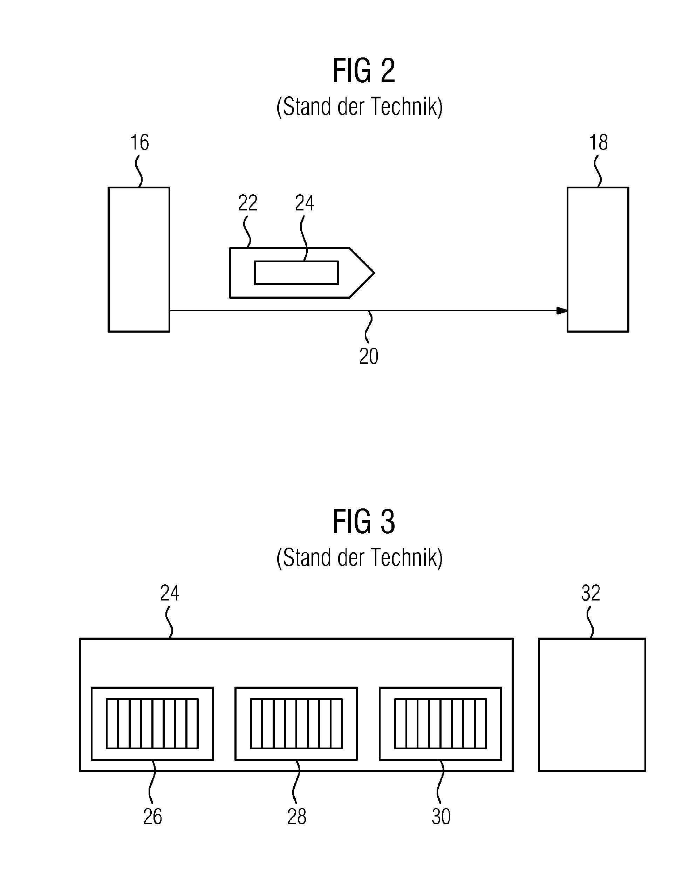

FIG 2 zeigt aus der Darstellung in FIG 1 nur noch die Steuerungsvorrichtung 16 und den Leistungsteil 18 des dortigen Frequenzumrichters und damit im Grunde eine Datenübertragung zwischen einem Sender (Steuerungsvorrichtung 16) und einem Empfänger (Leistungsteil 18). Auf die konkrete Funktionalität der Steuerungsvorrichtung 16 und des Leistungsteils 18 kommt es im Übrigen im Zusammenhang mit den nachfolgenden Erläuterungen nicht weiter an, so dass sich ein weiteres Eingehen auf deren jeweilige Funktionalität erübrigt und tatsächlich im Weiteren anstelle von Steuerungsvorrichtung 16 und Leistungsteil 18 von den allgemeineren Begriffen Sender bzw. Empfänger ausgegangen werden kann, wobei für diese im Folgenden die selben Bezugsziffern verwendet werden. Zwischen Sender 16 und Empfänger 18 besteht jedenfalls eine kommunikative Verbindung 20 und über diese erfolgt ein Datenaustausch, insbesondere ein zyklischer Datenaustausch, mit einem Telegramm 22. Das Telegramm 22 umfasst in an sich bekannter Art und Weise Nutzdaten 24 vom Sender 16 für den Empfänger 18.

Im Folgenden geht es nur noch um die vom Sender 16 an den Empfänger 18 übermittelten Nutzdaten 24 und FIG 3 zeigt insoweit schematisch vereinfacht eine vergrößerte Darstellung. Dabei wird exemplarisch davon ausgegangen, dass die Nutzdaten 24 ein erstes, zweites und drittes Datum 26, 28, 30 umfassen, wobei jedes Datum 26-30 im Hinblick auf für die zeichnerische Darstellung einfache Verhältnisse vom Datentyp Byte ist und also acht Bit umfasst (jedes Bit ist dabei durch ein vertikales Kästchen dargestellt). Zur Absicherung der mit einem solchen Telegramm 22 übertragenen Nutzdaten 24 ist im Stand der Technik die Ergänzung der Nutzdaten 24 um eine Prüfsumme 32 vorgesehen.

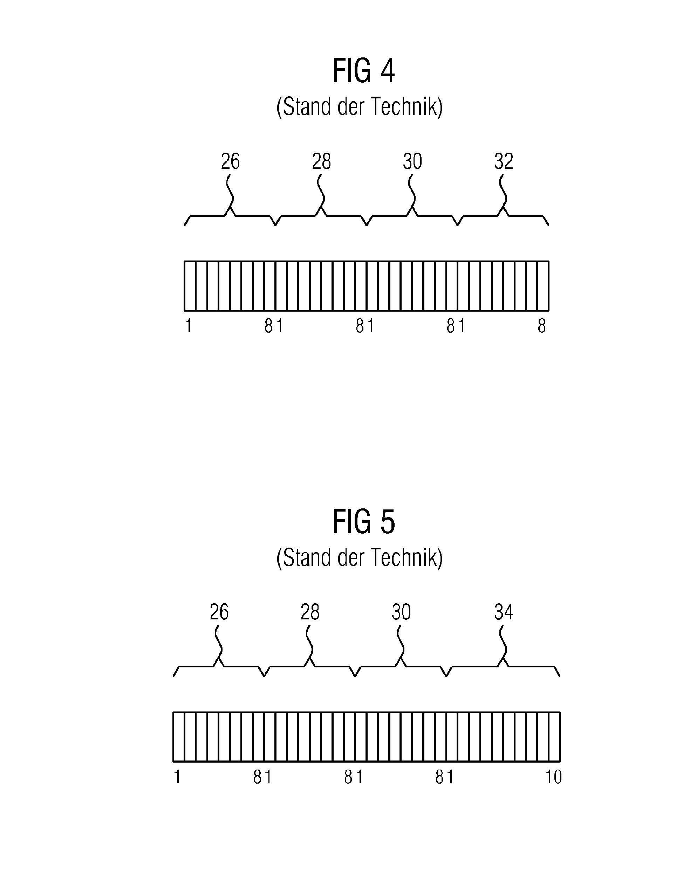

FIG 4 zeigt eine nochmals andere Darstellung der Situation gemäß FIG 3, wobei gezeigt ist, dass das Telegramm 22 (FIG 2) die jeweiligen Nutzdaten 24 (FIG 3), also hier das erste, zweite, und dritte Datum 26-30, und eine eventuelle Prüfsumme 32 als Bitfolge umfasst. Durch die Hinzufügung der Prüfsumme 32 verlängert sich das Telegramm 22 von vierundzwanzig Bit auf insgesamt zweiunddreißig Bit und für die Bildung der Prüfsumme 32 kommt z.B. ein an sich bekannter CRC-Code in Betracht. Diese Prüfsumme 32 wird auf Seiten des jeweiligen Senders 16 (FIG 2) über die zur Übertragung vorgesehenen Nutzdaten 24 berechnet. Beim Erhalt des Telegramms 22 ermittelt der jeweilige Empfänger 18 (FIG 2) über die erhaltenen Nutzdaten 24 nach der selben Bildungsregel eine eigene Prüfsumme und vergleicht diese mit der im Telegramm 22 erhaltenen Prüfsumme 32. Nur bei Übereinstimmung beider Prüfsummen 32 ist gewährleistet, dass der Inhalt des Telegramms 22 unverfälscht übertragen wurde und dass die von dem Telegramm 22 umfassten Nutzdaten 24 auf Seiten des Empfängers 18 verwendbar sind. Bei einem auf diese Weise evtl. erkannten Fehler muss das Telegramm 22 erneut übertragen werden, damit auf Seiten des Empfängers 18 verwendbare Daten vorliegen. Bis dahin kann evtl. - unter Inkaufnahme von Einbußen hinsichtlich der Dynamik eines jeweils angesteuerten Aggregats, z.B. eines Motors - ein alter Datensatz anstelle der als fehlerhafte erkannten Daten verwendet werden.

Speziell beim Übertragen von Daten in oder zu einer Antriebseinheit 10 (FIG 1), insbesondere in einem Frequenzumrichter 14 (FIG 1), aber auch bei jedem anderen Anwendungsszenario, wo mit hohen Taktraten Daten übertragen werden, deren eventuelle Verfälschung auf Empfängerseite sicher erkannt werden muss, stellt die Ergänzung eines Telegramms 22 um eine Prüfsumme 32 nicht immer eine optimale Lösung dar. Insofern ist im Stand der Technik bereits bekannt, anstelle der Prüfsumme 32 (FIG 4) den Nutzdaten 24 eines Telegramms 22 eine bestimmte Anzahl von Prüfbits 34 hinzuzufügen. Dies ist in FIG 5 dargestellt. Auch die Ergänzung eines Telegramms 22 um Prüfbits 32 vergrößert die Länge des Telegramms 22 und in der Praxis muss zwischen einer Menge der Nutzdatenbits, im dargestellten Beispiel also vierundzwanzig Bit, und der Anzahl der Prüfbits 34 (im dargestellten Beispiel zehn Bit) ein Kompromiss gefunden werden. Je größer die Anzahl der Prüfbits 34 ist, desto größer ist nämlich die Wahrscheinlichkeit, dass für eventuelle Fehler in den Nutzdatenbits eine Bitkorrektur möglich ist. Allerdings kann die Anzahl der Prüfbits 34, speziell bei einer Anwendung in einem Frequenzumrichter, auch nicht beliebig erhöht werden, denn für die Übermittlung des Telegramms 22 steht entsprechend der jeweiligen Zykluszeiten nur eine begrenzte Zeit zur Verfügung und jedes Prüfbit 34 verlängert das Telegramm 22 und damit dessen Übertragungsdauer. Die Zykluszeit, die zur Übermittlung eines Telegramms 22 zur Verfügung steht, ergibt sich z.B. anhand einer Dynamik des jeweiligen technischen Prozesses, bei einer Antriebseinheit 10 z.B. aufgrund eines Rechentaktes, mit dem eine Regelungstask in an sich bekannter Art und Weise Sollwerte für die Ansteuerung eines Elektromotors 14 ermittelt.

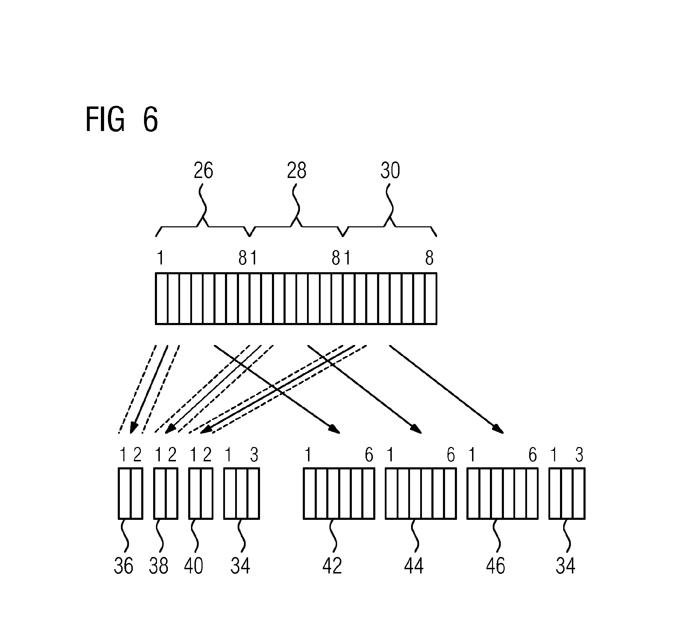

FIG 6 zeigt nun eine zeichnerische Darstellung einer Ausführungsform des Ansatzes gemäß der Erfindung. Dabei ist vorgesehen, dass jedes Datum 26-30 in einem besonders relevanten ersten Teil 36, 38, 40 und einen im Vergleich dazu weniger relevanten zweiten Teil 42, 44, 46 aufgeteilt wird. Die Darstellung zeigt dies am Beispiel jeweils zwei Bit bereiter erster Teile 36-40 und jeweils sechs Bit bereiter zweiter Teile 42-46. Bei dem oder jedem ersten Teil 36-40 handelt es sich jeweils um die höherwertigen Bits des zugrundeliegenden Datums 36-40. Entsprechend handelt es sich bei dem oder jedem zweiten Teil 42-46 um die verbleibenden und entsprechend niederwertigen Bits des jeweiligen Datums 26-30. Grundsätzlich kommt auch die Aufteilung eines Datums oder jedes Datums in mehr als zwei Teile in Betracht. Das Prinzip bleibt dabei unverändert.

Zur Absicherung der Datenübertragung ist nunmehr für alle ersten und zweiten Teile 36-40; 42-46 jeweils eine Hinzufügung von Prüfbits 34 mit einem fehlerkorrigierenden Code, z. B. auf Basis des Reed-Solomon-Verfahrens, vorgesehen. Die Besonderheit besteht im Vergleich zu der Hinzufügung von Prüfbits 34 bei der in FIG 5 dargestellten Situation darin, dass durch die Aufteilung eines Datum 26-30 oder einer Mehrzahl von Daten 26-30 in relevante erste Teile 36-40 und im Vergleich dazu weniger relevante zweite Teile 42-46 eine Absicherung des oder jedes ersten Teils 36-40 und des oder jedes zweiten Teils 42 -46 entsprechend der jeweiligen Bedeutung der davon umfassten Bits vorgesehen sein kann. Wenn nämlich angenommen wird, dass z.B. das erste Datum 26 eine Amplitude einer Sollspannung codiert, ist leicht einsehbar, dass ein eventueller Fehler im ersten Bit, dem höchstwertigen Bit oder dem sogenannten MSB, den Wert des Datums um fünfzig Prozent verändert. Ein eventueller Fehler im zweiten Bit verfälscht den Wert des Datums immer noch um fünfundzwanzig Prozent und je weiter in dieser Hinsicht in Richtung auf die niederwertigen Bits bis hin zum achten Bit, dem sogenannten LSB, fortgeschritten wird, sinkt der Einfluss eines eventuellen Bitfehlers auf den Gesamtwert des jeweiligen Datums. Indem aber durch die Aufteilung des oder jedes Datums 26-30 in erste und zumindest zweite Teile 36-40; 42-46 eine im Vergleich zur Anzahl der Nutzdatenbits höhere Anzahl von Prüfbits hinzugefügt wird, steigt die Möglichkeit der Bitfehlererkennung für den oder jeden ersten Teil 36-40, während die Möglichkeit der Bitfehlererkennung für den oder jeden zweiten Teil 42-46 zwar reduziert ist, dies aber wegen der geringeren Relevanz der davon umfassten Bits für den Gesamtwert des jeweiligen Datums 26-30 vertretbar ist.

Im dargestellten Beispiel wurden für jeden ersten Teil 36-40 die beiden höchstwertigen Bits des jeweiligen Datums 26-30 übernommen, so dass sich insgesamt sechs Nutzdatenbits ergeben. Diesen sind drei Prüfbits 34 zugeordnet. Für die zweiten Teile 42-46 wurden jeweils die verbleibenden sechs niederwertigen Bits übernommen, so dass sich insgesamt achtzehn Nutzdatenbits ergeben, die durch ebenfalls drei Prüfbits 34 abgesichert sind. Mit 3:6 im Vergleich zu 3:18 ist also das Verhältnis der Prüfbits 34 im Vergleich zu den Nutzdatenbits des oder jedes ersten Teils 36-40 größer - hier sogar deutlich größer - als das entsprechende Verhältnis der Prüfbits 34 zu den Nutzdatenbits der zweiten Teile 42-46. Als günstige Relation der Prüfbits 34 zu den Nutzdatenbits der ersten Teile 36-40 hat sich ein Verhältnis von fünfzig Prozent oder in einer Größenordnung von fünfzig Prozent herausgestellt, also bei sechs Nutzdatenbits drei Prüfbits 34 oder bei neun Nutzdatenbits (drei ersten Teilen mit jeweils drei höherwertigen Nutzdatenbits; nicht dargestellt) vier oder fünf Prüfbits 34. Die Anzahl der Prüfbits 34 zur Absicherung der zweiten Teile 42-46 kann sich im Wesentlichen an der noch zur Verfügung stehenden Telegrammlänge, also einer jeweiligen Bitzeit orientieren.

Nicht dargestellt jedoch an sich bekannt ist, dass jeweils die Steuerungsvorrichtung 16 und der Leistungsteil 18 - oder allgemein der jeweilige Sender 16 und der jeweilige Empfänger 18 - eine Verarbeitungseinheit in Form von oder nach Art eines Mikroprozessors oder dergleichen und einen Speicher aufweisen, in den ein durch die Verarbeitungseinheit ausführbares Computerprogramm mit Computerprogrammanweisungen geladen werden kann. In einen solchen Speicher wird zur Ausführung des Verfahrens ein entsprechendes Computerprogramm geladen, das beim Betrieb der Steuerungsvorrichtung 16/des Senders 16 durch deren bzw. dessen Verarbeitungseinheit ausführbar ist. Der senderseitige Aspekt des Verfahrens umfasst zumindest die Aufteilung des oder jedes Datums 26-30 und die Absicherung der sich dabei ergebenden zumindest zwei Bitfolgen mit jeweils einer Anzahl von Prüfbits. Der empfängerseitige Aspekt des Verfahrens umfasst die Auswertung der Prüfbits und Separierung der Bitfolgen und die anschließende Kombination der jeweiligen Nutzdatenbits zu weiter verarbeitbaren Daten. Das senderseitige Computerprogramm unterscheidet sich also von dem auf Empfängerseite benötigten Computerprogramm. Anstelle einer Implementation in Software kommt für jedes Computerprogramm auch zumindest teilweise eine Implementation in Firmware in Betracht. Dann handelt es sich bei der Verarbeitungseinheit zum Beispiel um einen sogenannten ASIC und dieser fungiert für die dort implementierte Funktionalität gleichzeitig auch als Speicher. Insofern soll der Begriff Computerprogramm auch eine evtl. Implementierung des Verfahrens oder einzelner Aspekte des Verfahrens in Firmware oder dergleichen umfassen.

Abweichend von der in FIG 6 dargestellten Ausführungsform kann der Ansatz gemäß der Erfindung auch verwirklicht werden, wenn bei einer Übertragung einer Mehrzahl von Daten die Gesamtheit der Daten 26, 28, 30 zumindest in einen ersten und einen zweiten Teil aufgeteilt wird, wobei der erste und zweite Teil jeweils mit einem fehlerkorrigierenden Code durch Hinzufügung von Prüfbits gesichert wird und wobei für den ersten Teil ein Verhältnis einer Anzahl der Nutzdatenbits zu einer Anzahl der Prüfbits größer als ein Verhältnis der Anzahl der Nutzdatenbits zu der Anzahl der Prüfbits für den zweiten Teil ist. Ein Beispiel für eine solche Anwendung des Ansatzes gemäß der Erfindung ist die Notwendigkeit einer Übertragung eines ersten, zweiten und dritten Datum 26, 28, 30 in einem Telegramm 22, von denen z.B. das zweite Datum 28 besonders wichtig ist und von denen das erste und dritte Datum 26, 28 weniger wichtig sind. Der erste Teil des Telegramms 22 wird dann durch das zweite Datum 28 gebildet. Der zweite Teil des Telegramms 22 wird durch das erste und dritte Datum 26, 30 gebildet. Beide Teile des Telegramms 22 werden wie oben beschrieben mit Prüfbits 34 gesichert, wobei für den ersten Teil das Verhältnis der Anzahl der Nutzdatenbits zu der Anzahl der Prüfbits größer als das entsprechende Verhältnis für den zweiten Teil ist, z.B. acht Nutzdatenbits im ersten Teil (zweites Datum 28), vier Prüfbits für den ersten Teil sowie sechzehn Nutzdatenbits im zweiten Teil (erstes und drittes Datum 26, 30) und vier Prüfbits für den zweiten Teil. Damit der Empfänger ein solchermaßen gebildetes Telegramm 22 auflösen kann, ist entweder das Bildungsschema fest projektiert oder in einem Telegrammkopf werden Parameter, die das Bildungsschema kodieren, mit übertragen.

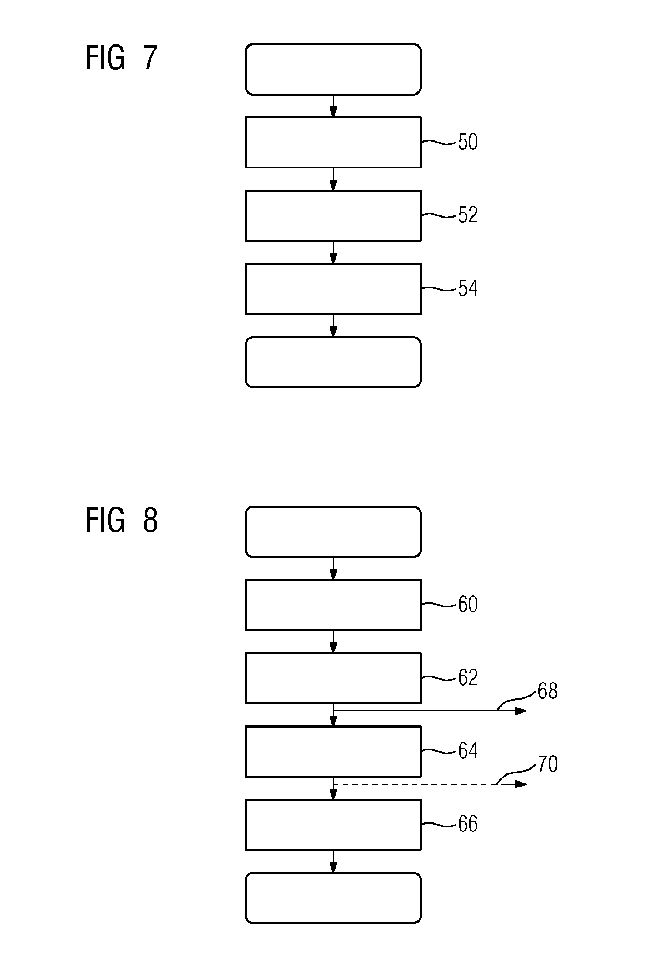

FIG 7 zeigt abschließend ein schematisch vereinfachtes Flussdiagramm zur nochmaligen Veranschaulichung einzelner Aspekte des Verfahrens. Danach wird durch einen Sender 18 im Vorfeld der Bildung eines Telegramms 22 zur Übertragung an einen jeweiligen Empfänger 20 das oder jedes Datum 26 -30 zumindest in einen besonders relevanten ersten Teil 36-40 und einen im Vergleich dazu weniger relevanten zweiten Teil 42-46 aufgeteilt (erster Funktionsblock 50). Dann wird der erste und zweite Teil oder alle ersten und zweiten Teile 36-40; 42-46 zusammen jeweils mit einem fehlerkorrigierenden Code durch Hinzufügung von Prüfbits 34 gesichert (zweiter Funktionsblock 52). Das Verhältnis einer Anzahl der Prüfbits 34 für den oder jeden ersten Teil 36-40 zu den Nutzdatenbits des oder jedes ersten Teils 36-40 ist dabei größer als das entsprechende Verhältnis der Prüfbits 34 zu den Nutzdatenbits des oder jedes zweiten Teils 42-46. Anschließend wird aus den Nutzdatenbits des oder jedes ersten Teils 36-40 und der zugehörigen Prüfbits 34 sowie den Nutzdatenbits des oder jedes zweiten Teils 42-46 und den dort zugehörigen Prüfbits 34 ein Telegramm 22 gebildet, das an den jeweiligen Empfänger 20 übermittelt wird (dritter Funktionsblock 54).

Auf Empfängerseite werden beim Erhalt eines so codierten Telegramms 22 die davon umfassten Nutzdatenbits und Prüfbits 34 ausgewertet, wie dies schematisch vereinfacht mit dem Flussdiagramm in FIG 8 gezeigt wird. Zwischen Sender 18 und Empfänger 20 ist dabei festgelegt, wie viele höherwertige Bits eines Datum 26-30 für die Bildung des jeweiligen ersten Teils 36-40 verwendet werden, so dass der Empfänger anhand dieser Festlegung und weiter anhand des bekannten Datenformats der erwarteten Daten den Bitstrom des Telegramms 22 geeignet separieren kann (vierter Funktionsblock 60). Sodann wird auf Empfängerseite für den oder jeden ersten Teil 36-40 mit der selben Bildungsregel eine Prüfziffer ermittelt und deren Wert mit dem Wert der im Telegramm für die ersten Teile 36-40 erhaltenen Prüfbits 34 verglichen. Bei einer eventuellen Abweichung wird auf Basis der Abweichung und/oder den empfangenen Prüfbits 34 so weit wie möglich eine Bitkorrektur für die Nutzdatenbits der ersten Teile 36-40 vorgenommen (fünfter Funktionsblock 62). In einem sechsten Funktionsblock 64 findet das soeben für die mit dem Telegramm 22 erhaltenen ersten Teile 36-40 beschriebene Prüf- und Korrekturverfahren für die zweiten Teile 42-46 statt. In einem abschließenden siebten Funktionsblock 66 werden aus den im Telegramm 22 separierten ersten und zweiten Teilen 36-40; 42-46 jeweils ein Datum 26-30 zur Weiterverarbeitung im Empfänger 20 gebildet.

Falls anhand der Prüfbits 34 für die ersten Teile 36-40 im fünften Funktionsblock 62 keine ausreichende Bitfehlerkorrektur erfolgen kann, ist vorgesehen, dass das Telegramm 22 mit einer entsprechenden Fehlermeldung oder einem entsprechenden Signal 68 an eine diesbezügliche Verarbeitungseinheit im Empfänger 20 verworfen wird. Ein ähnliches Signal 70 kann vorgesehen sein, wenn ein eventueller Bitfehler in dem oder jedem zweiten Teil 42-46 nicht anhand der dazu gebildeten Prüfbits 34 korrigiert werden kann. Häufig ist dies allerdings nicht erforderlich, denn ein Bitfehler in dem oder einem der zweiten Teile 42-46 hat nur einen geringen und oftmals in der Praxis gar nicht bemerkbaren Einfluss auf das jeweils mit dem Wert des verfälschten Datums 26-30 beaufschlagte Aggregat, also z.B. einen Elektromotor 14. Anstelle eines Signals 70 oder zusätzlich zu einem solchen Signal 70 kann dann vorgesehen sein, dass alle zweiten Teile 42-46 der aktuelle empfangenen Daten 26-30 oder ― soweit dies anhand der Prüfbits 34 eindeutig erkennbar ist ― der fehlerhafte zweite Teil 42-46 durch den oder jeden zweiten Teil 42-46 einer unmittelbar vorangehenden Datenübertragung ersetzt wird. Das Signal 70 kommt dann evtl. in Betracht um eine Häufigkeit von Fehlern in einem zweiten Teil 42-46 der Nutzdatenbits zu erkennen um damit ggf. systematische Fehler aufzudecken.

Einzelne im Vordergrund stehende Aspekte der hier eingereichten Beschreibung lassen sich damit kurz wie folgt zusammenfassen: Vorgeschlagen wird ein Verfahren zur Übertragung von mindestens einem Datum 26, 28, 30 von einem Sender 16 zu einem Empfänger 18, wobei das oder jedes Datum 26, 28, 30 und dessen bzw. deren Nutzdatenbits zumindest in einen besonders relevanten, ersten Teil 36, 38, 40 und einen im Vergleich dazu weniger relevanten, zweiten Teil 42, 44, 46 aufgeteilt wird bzw. werden, wobei der erste und zweite Teil 36, 38, 40; 42, 44, 46 jeweils mit einem fehlerkorrigierenden Code durch Hinzufügung von Prüfbits 34 gesichert wird und wobei für den ersten Teil 36, 38, 40 ein Verhältnis einer Anzahl der Nutzdatenbits zu einer Anzahl der Prüfbits 34 größer als ein Verhältnis der Anzahl der Nutzdatenbits zu der Anzahl der Prüfbits 34 für den zweiten Teil 42, 44, 46 ist. Dies nutzt die Tatsache aus, dass die Nutzdatenbits eines Telegramms 22 aufgrund der jeweiligen numerischen Wertigkeit unterschiedlich wichtig sind. Dadurch kann bei einer vorgegebenen Telegrammlänge eine Wahrscheinlichkeit für einen Ausfall zum Beispiel eines Frequenzumrichters aufgrund von Übertragungsfehlern deutlich reduziert werden, weil die wichtigsten Information mit einer höheren Sicherheit übertragen werden als die weniger wichtigen Informationen. Eine Antriebseinheit 10 mit einem Frequenzumrichter 14, in dem eine Datenübertragung auf Basis des hier vorgestellten Ansatzes erfolgt, ist damit robuster gegen Ausfälle.

Abschließend sei noch darauf hingewiesen, dass die Aufteilung eines Datums, einer Mehrzahl von Daten oder der Gesamtheit in zumindest einen ersten und einen zweiten Teil 36, 38, 40; 42, 44, 46 nichts oder zumindest nicht notwendig etwas über eine Position der beiden Teile in einem resultierenden Telegramm 22 aussagt. Der oder jede zweite Teil 42, 44, 46 mit seinen Prüfbits 34 kann also im Telegramm 22 ohne Weiteres vor dem oder jedem ersten Teil 36, 38, 40 und dessen bzw. deren Prüfbits 34 kommen. Des Weiteren eignet sich der Ansatzes gemäß der Erfindung auch für Kombinationen, etwa derart, dass in einem Telegramm 22 von einer Mehrzahl von Daten jedes Datum wie in FIG 6 dargestellt aufgeteilt wird, während andere Daten in ihrer Gesamtheit in wichtig und weniger wichtig aufgeteilt und mit einer entsprechenden relativen Anzahl von Prüfbits 34 abgesichert werden.

## Patentansprüche

1. Verfahren zur Übertragung von mindestens einem Datum (26, 28,30) in oder zu einer Antriebseinheit,
wobei das oder jedes Datum (26,28,30) oder die Gesamtheit der Daten (26,28,30) und dessen bzw. deren Nutzdatenbits zumindest in einen besonders relevanten, ersten Teil (36,38,40) und einen im Vergleich dazu weniger relevanten, zweiten Teil (42,44,46) aufgeteilt wird bzw. werden,
wobei der erste und zweite Teil (36,38,40;42,44,46) jeweils mit einem fehlerkorrigierenden Code durch Hinzufügung von Prüfbits (34) gesichert wird und
wobei für den ersten Teil (36,38,40) ein Verhältnis einer Anzahl der Nutzdatenbits zu einer Anzahl der Prüfbits (34) größer als ein Verhältnis der Anzahl der Nutzdatenbits zu der Anzahl der Prüfbits (34) für den zweiten Teil (42,44,46) ist.

2. Verfahren nach Anspruch 1, wobei bei einer Übertragung einer Mehrzahl von Daten jedes Datum (26,28,30) oder die Gesamtheit der Daten (26,28,30) zumindest in einen ersten und einen zweiten Teil (36,38,40;42,44,46) aufgeteilt wird, wobei alle ersten Teile (36,38,40) und alle zweiten Teile (42,44,46) zusammengefasst werden,
wobei alle ersten und zweiten Teile (36,38,40;42,44,46) zusammen jeweils mit einem fehlerkorrigierenden Code durch Hinzufügung von Prüfbits (34) gesichert werden,
wobei für die ersten Teile (36,38,40) ein Verhältnis einer Anzahl der Nutzdatenbits zu einer Anzahl der Prüfbits (34) größer als ein Verhältnis der Anzahl der Nutzdatenbits zu der Anzahl der Prüfbits (34) für die zweiten Teile (42,44,46) ist.

3. Verfahren nach Anspruch 1 oder 2, wobei für den ersten Teil (36,38,40) eines Datums (26,28,30) eine vorgegebene oder vorgebbare Anzahl von dessen höherwertigen Bits verwendet wird.

4. Verfahren nach Anspruch 1, 2 oder 3, wobei zur Ermittlung des fehlerkorrigierenden Codes das Reed-Solomon-Verfahren verwendet wird.

5. Verfahren nach einem der vorangehenden Ansprüche, wobei das zumindest eine Datum (26,28,30) von einer Steuerungsvorrichtung (16) eines Frequenzumrichters (14) zu einem Leistungsteil (18) des Frequenzumrichters (14) übertragen wird.

6. Computerprogramm mit Programmcode-Mitteln, um alle Schritte von jedem beliebigen der Ansprüche 1 bis 5 durchzuführen, wenn das Computerprogramm auf einer Steuerungsvorrichtung (16) einer Antriebseinheit (10) ausgeführt wird.

7. Computerprogrammprodukt mit Programmcode-Mitteln, die auf einem computerlesbaren Datenträger gespeichert sind, um das Verfahren nach jedem beliebigen der Ansprüche 1 bis 5 durchzuführen, wenn das Computerprogramm auf einer Steuerungsvorrichtung (16) einer Antriebseinheit (10) ausgeführt wird.

8. Digitales Speichermedium, insbesondere Diskette, mit elektronisch auslesbaren Steuersignalen, die so mit einer Steuerungsvorrichtung (16) einer Antriebseinheit zusammenwirken können, dass ein Verfahren nach einem der Ansprüche 1 bis 5 ausgeführt wird.

9. Antriebseinheit, insbesondere Frequenzumrichter (14), mit einer Steuerungsvorrichtung (16) und einem Leistungsteil (18) sowie einer Verarbeitungseinheit und einem Speicher auf Seiten der Steuerungsvorrichtung (16), wobei in den Speicher der Steuerungsvorrichtung (16) ein Computerprogramm nach Anspruch 6 geladen ist.
